# EUROPÄISCHE PATENTSCHRIFT

(11) **EP 3 415 051 B1**
(45) Veröffentlichungstag und Bekanntmachung des Hinweises auf die Patenterteilung: **17.03.2021**
(21) Anmeldenummer: 18176895.3
(22) Anmeldetag: 11.06.2018
(51) Int. Cl.: A47J 31/20, A47J 31/44

(54) **SYSTEM ZUR HANDHABUNG EINES TEESIEBEINSATZES SOWIE GRIFFELEMENT UND TEEAUTOMAT DAFÜR**
SYSTEM FOR HANDLING A TEA STRAINER INSERT AND HANDLE AND TEA MACHINE FOR SAME
SYSTÈME DE MANIPULATION D'UN TISSU POUR FILTRE À THÉ AINSI QU ÉLÉMENT DE PRÉHENSION ET DISTRIBUTEUR AUTOMATIQUE DE THÉ CORRESPONDANT

(30) Priorität: 12.06.2017 DE 102017112901
(43) Veröffentlichungstag der Anmeldung: 19.12.2018
(73) Patentinhaber: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Dr. Sascha, 48607 Ochtrup (DE); ZILS, Jürgen, 51399 Burscheid (DE)
(74) Vertreter: Cohausz & Florack

(56) Entgegenhaltungen:
- WO-A1-2016/096955
- US-A1- 2014 150 667

## Beschreibung

Die Erfindung betrifft ein System zur Handhabung eines Teesiebeinsatzes, umfassend einen Teesiebeinsatz zum Einsetzen in eine Brühkammer eines Teeautomaten und ein von dem Teesiebeinsatz separates Griffelement.

Aus dem Stand der Technik der WO 2016/096955 A1 ist ein Teeautomat zur automatischen Zubereitung von Teegetränken in einer Brühkammer bekannt, bei dem zur Durchführung eines Brühvorgangs in der Brühkammer ein Teesiebeinsatz mittels einer magnetisch mit dem Teesiebeinsatz gekoppelten Verfahreinrichtung auf und ab bewegt wird. Auf das Sieb des Teesiebeinsatzes werden für einen Brühvorgang Teeblätter gegeben, die mit dem Teesiebeinsatz während des Brühvorgangs in heißes Wasser getaucht und nach dem Brühvorgang mit dem Siebeinsatz wieder aus dem Wasser herausgehoben werden.

In der US 2014 / 0150667 A1 wird eine Brühvorrichtung mit einem in einer Brühkammer angeordneten Filter beschrieben, der magnetisch mit einem Betätigungskörper gekoppelt ist, so dass der Filter durch Verschieben des Betätigungskörpers in der Brühkammer bewegt werden kann.

Nach der Durchführung eines Brühvorgangs müssen die ausgelaugten Teeblätter von dem Teesiebeinsatz entfernt werden. Dies hat sich bei den aus dem Stand der Technik bekannten Teeautomaten und Teesiebeinsätzen als aufwändig und schwierig herausgestellt. Insbesondere birgt die Handhabung und Säuberung des Teesiebeinsatzes die Gefahr von Verbrühungen. Weiterhin kann sich auch das Wiedereinsetzen des Teesiebeinsatzes in die Brühkammer nach dessen Säuberung als schwierig erweisen.

Vor diesem Hintergrund liegt der vorliegenden Erfindung die Aufgabe zugrunde, ein System zur Handhabung eines Teesiebeinsatzes zur Verfügung zu stellen, mit dem die zuvor genannten Probleme vermieden bzw. zumindest reduziert werden.

Diese Aufgabe wird erfindungsgemäß gelöst durch ein System, umfassend einen Teesiebeinsatz zum Einsetzen in eine Brühkammer eines Teeautomaten und ein von dem Teesiebeinsatz separates Griffelement, wobei das Griffelement und der Teesiebeinsatz zueinander korrespondierende magnetische Kopplungsmittel aufweisen, so dass der Teesiebeinsatz, wenn er über die Kopplungsmittel magnetisch mit dem Griffelement gekoppelt ist, durch Ergreifen des Griffelementes transportiert werden kann.

Es wurde erkannt, dass sich aus dem Stand der Technik bekannte Teesiebeinsätze durch ein mit dem Teesiebeinsatz magnetisch gekoppeltes Griffelement auf einfache Weise handhaben lassen. Insbesondere kann der Teesiebeinsatz über das Griffelement ergriffen werden, so dass eine direkte Berührung des Teesiebeinsatzes nicht erforderlich ist und eine mögliche Verbrühungsgefahr vermieden wird. Für Teesiebeinsätze, die magnetisch mit einer Verfahreinrichtung eines Magnetautomaten gekoppelt werden können, besteht zudem der Vorteil, dass zusätzlich eine Koppelung mit einem Griffelement ermöglicht wird, ohne dass neben den bereits vorgesehenen Magneten zur Koppelung an die Verfahreinrichtung weitere Kopplungsmittel am Teesiebeinsatz vorgesehen werden müssen.

Das System umfasst einen Teesiebeinsatz zum Einsetzen in eine Brühkammer eines Teeautomaten. Der Teesiebeinsatz kann insbesondere einen Teesiebeinsatzkörper, beispielsweise aus einem Kunststoff, aufweisen, an dem ein Teesieb befestigt werden kann oder ist.

Das Griffelement ist vorzugsweise an die Form des Teesiebeinsatzes angepasst. Insbesondere ist das Griffelement derart ausgebildet, dass es mittels der magnetischen Kopplungsmittel randseitig am Teesiebeinsatz befestigt werden kann.

Das Griffelement und der Teesiebeinsatz weisen zueinander korrespondierende magnetische Kopplungsmittel auf. Zu diesem Zweck weisen das Griffelement und der Teesiebeinsatz vorzugsweise jeweils mindestens einen Magneten, insbesondere Permanentmagneten, auf. Alternativ kann entweder das Griffelement oder der Teesiebeinsatz ein magnetisches Element aufweisen, das von einem Permanentmagneten angezogen wird, beispielsweise ein Stück Eisen.

Das Griffelement und der Teesiebeinsatz können mittels der magnetischen Kopplungsmittel miteinander gekoppelt werden. Zu diesem Zweck werden das Griffelement und der Teesiebeinsatz in eine vordefinierte Ausrichtung zueinander gebracht, so dass die magnetischen Kopplungsmittel des Griffelementes und des Teesiebeinsatzes miteinander wechselwirken, beispielsweise korrespondierende Magnete des Griffelementes und des Teesiebeinsatzes einander gegenüberliegen. Zweckmäßigerweise wird das Griffelement durch die magnetischen Kopplungsmittel an dem Teesiebeinsatz befestigt. Die Kopplung von Griffelement und Teesiebeinsatz erfolgt derart, dass der Teesiebeinsatz durch Ergreifen des Griffelementes transportiert werden kann.

Die oben genannte Aufgabe wird weiterhin gelöst durch ein Griffelement für das zuvor beschriebene System mit einem Griffbereich zum Ergreifen des Griffelements und einem Kopplungsbereich zur Anlage an einen mit dem Griffelement zu koppelnden Teesiebeinsatz. Der Kopplungsbereich weist vorzugsweise eine konkave Kontaktfläche zur Anlage an eine korrespondierende konvexe Außenfläche eines zu koppelnden Teesiebeinsatzes auf. Weiterhin weist das Griffelement vorzugsweise eine Magnetanordnung mit mindestens einem Magneten auf, die derart angeordnet ist, um einen Teesiebeinsatz mit korrespondierender Magnetanordnung bei Anlage des Teesiebeinsatzes an die konkave Kontaktfläche magnetisch mit dem Griffelement zu koppeln.

Das Griffelement weist einen Griffbereich zum Ergreifen des Griffelementes auf. Beispielsweise kann das Griffelement an einer außerhalb der Kontaktfläche angeordneten Seite eine Griffmulde, einen Griffabschnitt oder dergleichen aufweisen, der das Ergreifen des Griffelementes erleichtert.

Der Kopplungsbereich des Griffelementes weist vorzugsweise eine konkave Kontaktfläche zur Anlage an eine korrespondierende konvexe Außenfläche eines zu koppelnden Teesiebeinsatzes auf. Die konkave Kontaktfläche kann beispielsweise im Wesentlichen die Form eines Zylindermantelabschnitts aufweisen. Auf diese Weise ist der Kopplungsbereich besonders an ring- bzw. zylinderförmige Teesiebeinsätze angepasst. Durch die konkave Form der Kontaktfläche umgibt bzw. umgreift das Griffelement einen zu koppelnden Teesiebeinsatz mit korrespondierender konvexer Außenfläche zumindest teilweise, so dass ein besserer Halt erzielt werden kann als beispielsweise mit einer ebenen Kontaktfläche. Weiterhin führt die Konkavität der Kontaktfläche des Griffelements dazu, dass das Griffelement über einen größeren Bereich näher an einer entsprechenden konvexen Außenfläche eines Teesiebeinsatzes positioniert werden kann, so dass eine bessere Wechselwirkung der magnetischen Kopplungsmittel erreicht wird.

Das Griffelement weist eine Magnetanordnung mit mehreren Magneten auf, die derart angeordnet sind, um einen Teesiebeinsatz mit korrespondierender Magnetanordnung bei Anlage des Teesiebeinsatzes an die konkave Kontaktfläche magnetisch mit dem Griffelement zu koppeln. Vorzugsweise weist die Magnetanordnung mehrere Magnete auf, insbesondere mindestens zwei oder mindestens drei Magnete. Durch die Mehrzahl von Magneten kann ein besserer Halt des Griffelementes an dem Teesiebeinsatz erreicht werden, insbesondere ein Halt in einer vorgegebenen Ausrichtung zueinander.

Im Folgenden werden verschiedene Ausführungsformen des Systems und des Griffelementes beschrieben, wobei die einzelnen Ausführungsformen jeweils sowohl für das System als auch für das Griffelement gelten und zudem untereinander kombiniert werden können.

Bei einer ersten Ausführungsform weist das Griffelement eine Magnetanordnung mit mehreren Magneten auf, die mit einer korrespondierenden Magnetanordnung des Teesiebeinsatzes magnetisch derart koppelbar ist, dass die Magnete der Magnetanordnung des Griffelements mit den Magneten der Magnetanordnung des Teesiebeinsatzes mehrere Magnetpaare bilden. Insbesondere sind die Magnete der Magnetanordnung des Griffelements und der Magnetanordnung des Teesiebeinsatzes derart angeordnet, dass die jeweiligen Magnete eines Magnetpaares einander gegenüberliegen, wenn das Griffelement mit dem Teesiebeinsatz gekoppelt ist. Ein Magnetpaar wird jeweils durch einen Magneten des Griffelements und einen Magneten des Teesiebeinsatzes gebildet.

Durch das Vorsehen zueinander korrespondierender Magnetanordnungen kann das Griffelement sicher an dem Teesiebeinsatz befestigt werden. Vorzugsweise richten die Magnetpaare das Griffelement am Teesiebeinsatz in einer vorgegebenen Ausrichtung aus.

Die Magnete der Magnetpaare sind so angeordnet, dass jeweils ein magnetischer Nordpol einem magnetischen Südpol gegenüberliegt, so dass sich die Magnete der Magnetpaare gegenseitig anziehen.

Bei einer weiteren Ausführungsform des Systems sind die Magnete der Magnetanordnungen mit wechselnder Polarität ausgerichtet. Bei einer entsprechenden Ausführungsform des Griffelementes umfasst die Magnetanordnung mehrere Magnete, die in wechselnder Polarität zur konkaven Kontaktfläche ausgerichtet sind. Die Magnete der Magnetanordnung des Griffelements sind also derart angeordnet, dass einmal der magnetische Nordpol und einmal der magnetische Südpol zum jeweils gegenüberliegenden korrespondierenden Magneten der Magnetanordnung des Teesiebeinsatzes weist, wenn das Griffelement und der Teesiebeinsatz miteinander gekoppelt sind. Auf diese Weise kann das Griffelement nur in einer oder ggf. auch zwei bestimmten Ausrichtungen mit dem Teesiebeinsatz gekoppelt werden. Die Anziehungskraft gegensätzlicher Pole und die Abstoßung gleichartiger Pole erleichtern die richtige Ausrichtung des Griffelements und des Teesiebeinsatzes zueinander.

Bei einer weiteren Ausführungsform weist der Teesiebeinsatz einen Teesiebeinsatzkörper mit einer konvexen randseitigen Außenfläche auf und das Griffelement weist eine zu der Außenfläche des Teesiebeinsatzkörpers korrespondierende konkave Kontaktfläche auf, die an der konvexen randseitigen Außenfläche des Teesiebeinsatzkörpers zur Anlage kommt, wenn das Griffelement mit dem Teesiebeinsatz gekoppelt wird.

Bei der randseitigen Außenfläche des Teesiebeinsatzkörpers kann es sich beispielsweise um eine im Wesentlichen zylindermantelförmige Außenfläche handeln, zum Beispiel wenn der Teesiebeinsatzkörper in Form eines Rings bzw. eines Hohlzylinders ausgebildet ist. Die konkave Kontaktfläche des Griffelements kann entsprechend in Form eines Zylindermantelabschnitts ausgebildet sein. Durch die konkave Form der Innenfläche umgibt das Griffelement den Teesiebeinsatzkörper an der entsprechenden konvexen Außenfläche zumindest teilweise, so dass ein besserer Halt zwischen Griffelement und Teesiebeinsatz erreicht werden kann.

Bei einer weiteren Ausführungsform des Griffelementes umfasst die Magnetanordnung einen ersten und einen zweiten Magneten, deren Polachsen schräg zueinander verlaufen, insbesondere in einem Winkel zwischen 10° und 170°. Unter den Polachsen wird vorliegend die Achse durch den magnetischen Nord- und Südpol des Magneten verstanden. Indem die Polachsen schräg zueinander verlaufen, wirken die Magnete der Magnetanordnung in verschiedenen Richtungen, so dass eine bessere Fixierung des Griffelementes an dem Teesiebeinsatz erreicht wird. Die Anordnung mit schräg zueinander verlaufenden Polachsen wird insbesondere durch die konkave Form der Kontaktfläche ermöglicht. So weist das Griffelement vorzugsweise mehrere in azimutaler Richtung zueinander versetzte Magnete auf, deren Polachsen aufgrund der konkaven Form der Kontaktfläche schräg zueinander verlaufen.

Erfindungsgemäß weisen der Teesiebeinsatz und das Griffelement jeweils eine Fläche auf, die, wenn das Griffelement mit dem Teesiebeinsatz gekoppelt ist, zusammen eine unterseitige Nut zum Aufsetzen auf den Rand einer Brühkammer bilden. Auf diese Weise wird das Einsetzen des Teesiebsatzes in eine Brühkammer erheblich erleichtert. Die Nut ist vorzugsweise kreisbogenförmig und dadurch an eine zylindrische Brühkammer angepasst.

Bei der Handhabung des Teesiebeinsatzes mit einem Griffelement kann es sich als schwierig herausstellen, das Griffelement vom Teesiebeinsatz zu trennen, um den Teesiebeinsatz in die Brühkammer einzusetzen. Durch eine von jeweils einer Fläche des Griffelements und des Teesiebeinsatzes gebildete unterseitige Nut kann der Rand einer Brühkammer zwischen Griffelement und den Teesiebeinsatz geführt werden, so dass sich das Griffelement leicht von dem Teesiebeinsatz lösen und der Teesiebeinsatz in die Brühkammer einführen lässt.

Die die Nut bildende Fläche des Teesiebeinsatzes und/oder des Griffelements kann insbesondere durch eine an der Unterseite des Teesiebeinsatzes bzw. des Griffelements vorgesehene Ausnehmung oder Fase gebildet werden.

Bei einer weiteren Ausführungsform umfasst das System weiter eine Brühkammer für einen Teeautomaten, wobei der Teesiebeinsatz zum Einsetzen in die Brühkammer eingerichtet ist. Insbesondere sind die Größe und die Form des Teesiebeinsatzes an die Größe und die Form der Brühkammer angepasst.

Bei einer weiteren Ausführungsform weist das Griffelement eine konkave Kontaktfläche auf, die an eine Außenwandfläche der Brühkammer angepasst ist. Dies erleichtert das Einsetzen des Teesiebeinsatzes in die Brühkammer. Insbesondere kann das Griffelement nach Einsetzen des Teesiebeinsatzes in die Brühkammer an der Brühkammerwand gehalten werden, so dass es magnetisch weiterhin mit dem Teesiebeinsatz in der Brühkammer gekoppelt ist. Ein unerwünschtes Hinunterfallen des Teesiebeinsatz zum Boden der Brühkammer kann auf diese Weise verhindert werden.

Vorzugsweise ist die Brühkammer zylinderförmig und die konkave Kontaktfläche des Griffelements weist im Wesentlichen die Form eines Zylindermantelabschnitts auf, dessen Krümmungsradius vorzugsweise an den Krümmungsradius der Brühkammer angepasst ist. Der Krümmungsradius der Kontaktfläche des Griffelements kann aus diesem Grund etwas größer sein als der Krümmungsradius der Außenfläche des Teesiebeinsatzkörpers.

Bei einer weiteren Ausführungsform umfasst das System einen die Brühkammer umfassenden Teeautomaten zur automatischen Zubereitung von Teegetränken, wobei der Teeautomat eine Verfahreinrichtung mit Verbindungsmitteln zum lösbaren Verbinden des Griffelements mit der Verfahreinrichtung aufweist, wobei die Verfahreinrichtung dazu eingerichtet ist, das Griffelement, wenn es mit der Verfahreinrichtung verbunden ist, an der Brühkammer zu verfahren. Auf diese Weise kann das Griffelement nicht nur zum Transport des Teesiebeinsatzes, sondern auch zum Verfahren des Teesiebeinsatzes in der Brühkammer eingesetzt werden. Einerseits kann dadurch ein separates magnetisches Element an der Verfahreinrichtung des Teeautomaten eingespart werden. Andererseits erleichtert dies die Handhabung des Teesiebeinsatzes, da es nicht mehr erforderlich ist, das Griffelement magnetisch von dem Teesiebeinsatz zu entkoppeln, um einen Brühvorgang durchzuführen.

Entsprechend wird die oben genannte Aufgabe weiterhin gelöst durch einen Teeautomaten zur automatischen Zubereitung von Teegetränken für das zuvor beschriebene System bzw. eine Ausführungsform davon, mit einer Brühkammer und einer Verfahreinrichtung, wobei die Verfahreinrichtung Verbindungsmittel zum lösbaren Verbinden eines Griffelementes für einen Teesiebeinsatz mit der Verfahreinrichtung aufweist und wobei die Verfahreinrichtung dazu eingerichtet ist, wenn ein Griffelement mit der Verfahreinrichtung verbunden ist, das Griffelement an der Brühkammer zu verfahren.

Die Verfahreinrichtung weist vorzugsweise ein bewegliches Element auf, das, vorzugsweise gesteuert durch eine Steuereinrichtung des Teeautomaten, entlang der Brühkammer auf und ab fahren kann. An dem beweglichen Element sind vorzugsweise ein Verbindungsmittel, bevorzugt zwei Verbindungsmittel, zum lösbaren Verbinden des Griffelements vorgesehen.

Die Verbindungsmittel sind vorzugsweise verriegelbar ausgestaltet, so dass das über die Verbindungsmittel mit der Verfahreinrichtung gekoppelte Griffelement bei verriegelter Stellung der Verbindungsmittel nicht von der Verfahreinrichtung gelöst werden kann, zum Beispiel durch während des Verfahrens auftretende Kräfte. Auf diese Weise wird verhindert, dass während der Durchführung eines Brühvorgangs das Griffelement von der Verfahreinrichtung gelöst wird.

Weiterhin wird die oben genannte Aufgabe gelöst durch ein Verfahren zum Betrieb des zuvor beschriebenen Teeautomaten, bei dem die Verbindungsmittel nach dem Verbinden bzw. Koppeln eines Griffelementes mit der Verfahreinrichtung verriegelt werden, bei dem nach dem Verriegeln der Verbindungsmittel ein Brühvorgang durchgeführt wird, bei dem das Griffelement an der Brühkammer verfahren wird, und bei dem die Verbindungsmittel nach dem Brühvorgang entriegelt werden, so dass das Griffelement aus der Verfahreinrichtung entnehmbar ist.

Bei einer entsprechenden Ausführungsform des Teeautomaten sind die Verbindungsmittel verriegelbar und der Teeautomat weist eine Steuereinrichtung auf, die dazu eingerichtet ist, den Teeautomaten entsprechend dem zuvor beschriebenen Verfahren zu steuern.

Bei der weiteren Ausführungsform weist der Teeautomat ein an das Griffelement angepasstes Justiersystem zur Ausrichtung des Griffelementes in einer vorgegebenen Ausrichtung auf. Beispielsweise können am Teeautomaten Justiervorsprünge oder Justiernuten als Justiersystem vorgesehen sein, so dass das Griffelement nur in einer bestimmten Ausrichtung (Arbeitsstellung) in den Teeautomaten einsetzbar und mit dem Verfahrsystem koppelbar ist. Dies erleichtert dem Nutzer die Bedienung des Teeautomaten, insbesondere das Einsetzen des Griffelementes in die Verfahreinrichtung.

Bei einer weiteren Ausführungsform ist das Griffelement derart ausgebildet, dass es in einer ersten Ausrichtung zum Teesiebeinsatz und in einer zweiten, gegenüber der ersten Ausrichtung umgedrehten Ausrichtung zum Teesiebeinsatz mit dem Teesiebeinsatz koppelbar ist. Auf diese Weise wird die Ausrichtung des Griffelements zum Teesiebeinsatz und damit die Koppelung des Griffelements mit dem Teesiebeinsatz vereinfacht. Vorzugsweise weisen die Kontaktfläche, die bei der Koppelung mit dem Teesiebeinsatz zur Anlage kommt, und ggf. eine Magnetanordnung des Griffelements eine geradzahlige, insbesondere zweizählige Drehsymmetrie zu einer senkrecht zur Kontaktfläche verlaufende Drehsymmetrieachse auf.

Bei einer weiteren Ausführungsform weist das Griffelement zwei gegenüberliegende Griffflächen auf. Die Griffflächen sind vorzugsweise so angeordnet, dass die durch die beiden Griffflächen verlaufende Achse senkrecht zu einer senkrecht durch die Kontaktfläche verlaufenden Drehsymmetrieachse des Griffelements verläuft. Diese Anordnung der Griffflächen ermöglicht ein ergonomisches und sicheres Ergreifen des Griffelements.

Bei einer weiteren Ausführungsform des Systems weisen die Verfahreinrichtung und das Griffelement zueinander korrespondierende Verbindungsmittel auf, um das Griffelement mit der Verfahreinrichtung zu verbinden bzw. zu koppeln. Insbesondere kann das Griffelement Vorsprünge und die Verfahreinrichtung korrespondierende Aufnahmen aufweisen, so dass das Griffelement durch Einrasten der Vorsprünge in die Aufnahmen mit der Verfahreinrichtung gekoppelt werden kann.

Die Verbindungsmittel an der Verfahreinrichtung und/oder am Griffelement sind vorzugsweise federnd gelagert. Dadurch wird das Einsetzen des Griffelements in die Verfahreinrichtung erleichtert. Beispielsweise können federnd gelagerte Aufnahmen an der Verfahreinrichtung beim Herabdrücken des Griffelements korrespondierenden Vorsprüngen am Griffelement ausweichen, so dass die Vorsprünge in die Aufnahmen einrasten können.

Im Folgenden werden weitere Ausführungsformen 1 bis 9 des Systems, Ausführungsformen 10 bis 12 des Griffelementes, Ausführungsformen 13 und 14 des Teeautomaten sowie Ausführungsform 15 des Verfahrens beschrieben. Diese können untereinander und mit den zuvor beschriebenen Ausführungsformen kombiniert werden:
1. System zur Handhabung eines Teesiebeinsatzes, umfassend einen Teesiebeinsatz zum Einsetzen in eine Brühkammer eines Teeautomaten und ein von dem Teesiebeinsatz separates Griffelement, insbesondere gemäß einer der Ausführungsformen 10 bis 12, dadurch gekennzeichnet, dass das Griffelement und der Teesiebeinsatz zueinander korrespondierende magnetische Kopplungsmittel aufweisen, so dass der Teesiebeinsatz, wenn er über die Kopplungsmittel magnetisch mit dem Griffelement gekoppelt ist, durch Ergreifen des Griffelements transportiert werden kann.
2. System nach Ausführungsform 1, dadurch gekennzeichnet, dass das Griffelement eine Magnetanordnung mit mehreren Magneten aufweist, die mit einer korrespondierenden Magnetanordnung des Teesiebeinsatzes magnetisch derart koppelbar ist, dass die Magnete der Magnetanordnung des Griffelements mit den Magneten der Magnetanordnung des Teesiebeinsatzes mehrere Magnetpaare bilden.
3. System nach Ausführungsform 2, dadurch gekennzeichnet, dass die Magnete der Magnetanordnungen mit wechselnder Polarität ausgerichtet sind.
4. System nach einer der Ausführungsformen 1 bis 3,dadurch gekennzeichnet, dass der Teesiebeinsatz einen Teesiebeinsatzkörper mit einer konvexen randseitigen Außenfläche aufweist und dass das Griffelement eine zu der Außenfläche des Teesiebeinsatzkörpers korrespondierende konkave Kontaktfläche aufweist, die an der konvexen randseitigen Außenfläche des Teesiebeinsatzkörpers zur Anlage kommt, wenn das Griffelement mit dem Teesiebeinsatz gekoppelt wird.
5. System nach einer der Ausführungsformen 1 bis 4, dadurch gekennzeichnet, dass der Teesiebeinsatz und das Griffelement jeweils eine Fläche aufweisen, die, wenn das Griffelement mit dem Teesiebeinsatz gekoppelt ist, zusammen eine unterseitige Nut zum Aufsetzen auf den Rand einer Brühkammer bilden.
6. System nach einer der Ausführungsformen 1 bis 5, weiter umfassend eine Brühkammer für einen Teeautomaten, wobei der Teesiebeinsatz zum Einsetzen in die Brühkammer eingerichtet ist.
7. System nach Ausführungsform 6, dadurch gekennzeichnet dass das Griffelement eine konkave Kontaktfläche aufweist, die an eine Außenwandfläche der Brühkammer angepasst ist.
8. System nach Ausführungsform 6 oder 7, weiter umfassend einen die Brühkammer umfassenden Teeautomaten zur automatischen Zubereitung von Teegetränken, insbesondere gemäß Ausführungsform 13 oder 14, wobei der Teeautomat eine Verfahreinrichtung mit Verbindungsmitteln zum lösbaren Verbinden des Griffelements mit der Verfahreinrichtung aufweist, wobei die Verfahreinrichtung dazu eingerichtet ist, das Griffelement, wenn es mit der Verfahreinrichtung verbunden ist, an der Brühkammer zu verfahren.
9. System nach Ausführungsform 8, dadurch gekennzeichnet, dass der Teeautomat ein an das Griffelement angepasstes Justiersystem zur Ausrichtung des Griffelements in einer vorgegebenen Ausrichtung aufweist.
10. Griffelement für ein System nach einem der Ausführungsformen 1 bis 9, mit einem Griffbereich zum Ergreifen des Griffelements und einem Kopplungsbereich zur Anlage an einen mit dem Griffelement zu koppelnden Teesiebeinsatz, wobei der Kopplungsbereich eine konkave Kontaktfläche zur Anlage an eine korrespondierende konvexe Außenfläche eines zu koppelnden Teesiebeinsatzes aufweist und wobei das Griffelement eine Magnetanordnung mit mindestens einem Magneten aufweist, die derart angeordnet ist, um einen Teesiebeinsatz mit korrespondierender Magnetanordnung bei Anlage des Teesiebeinsatzes an die konkave Kontaktfläche magnetisch mit dem Griffelement zu koppeln.
11. Griffelement nach Ausführungsform 10, dadurch gekennzeichnet, dass die Magnetanordnung mehrere Magnete umfasst, die in wechselnder Polarität zur konkaven Kontaktfläche ausgerichtet sind.
12. Griffelement nach Ausführungsform 10 oder 11, dadurch gekennzeichnet, dass die Magnetanordnung einen ersten und einen zweiten Magneten umfasst, deren Polachsen schräg zueinander verlaufen, insbesondere in einem Winkel zwischen 10° und 170°.
13. Teeautomat zur automatischen Zubereitung von Teegetränken für ein System nach Ausführungsform 8 oder 9, mit einer Brühkammer und mit einer Verfahreinrichtung, wobei die Verfahreinrichtung Verbindungsmittel zum lösbaren Verbinden eines Griffelements für einen Teesiebeinsatz mit der Verfahreinrichtung aufweist und wobei die Verfahreinrichtung dazu eingerichtet ist, wenn ein Griffelement mit der Verfahreinrichtung verbunden ist, das Griffelement an der Brühkammer zu verfahren.
14. Teeautomat nach Ausführungsform 13, dadurch gekennzeichnet, dass die Verbindungsmittel verriegelbar sind und der Teeautomat eine Steuereinrichtung aufweist, die dazu eingerichtet ist, den Teeautomaten entsprechend dem Verfahren nach Ausführungsform 15 zu steuern.
15. Verfahren zum Betrieb eines Teeautomaten nach Ausführungsform 14, bei dem die Verbindungsmittel nach dem Verbinden eines Griffelements mit der Verfahreinrichtung verriegelt werden, bei dem nach dem Verriegeln der Verbindungsmittel ein Brühvorgang durchgeführt wird, bei dem das Griffelement an der Brühkammer verfahren wird, und bei dem die Verbindungsmittel nach dem Brühvorgang entriegelt werden, so dass das Griffelement aus der Verfahreinrichtung entnehmbar ist.

Weitere Merkmale und Vorteile des Systems, des Griffelements, des Teeautomaten und des Verfahrens können der nachfolgenden Beschreibung von Ausführungsbeispielen entnommen werden, wobei auf die beigefügte Zeichnung Bezug genommen wird.

In der Zeichnung zeigen
- Fig. 1a - b: ein Ausführungsbeispiel des Systems mit einem Teesiebeinsatz und einem Ausführungsbeispiel des Griffelements,
- Fig. 2a - b: das Ausführungsbeispiel aus Fig. 1a - b nach dem Einsetzen des Teesiebeinsatzes in eine Brühkammer,
- Fig. 3a - c: ein weiteres Ausführungsbeispiel des Systems mit einem Ausführungsbeispiel des Teeautomaten sowie ein Ausführungsbeispiel des Verfahrens, und
- Fig. 4a -: b eine Detaildarstellung des Systems aus Fig. 3a zu zwei verschiedenen Zeitpunkten des Ausführungsbeispiels des Verfahrens.

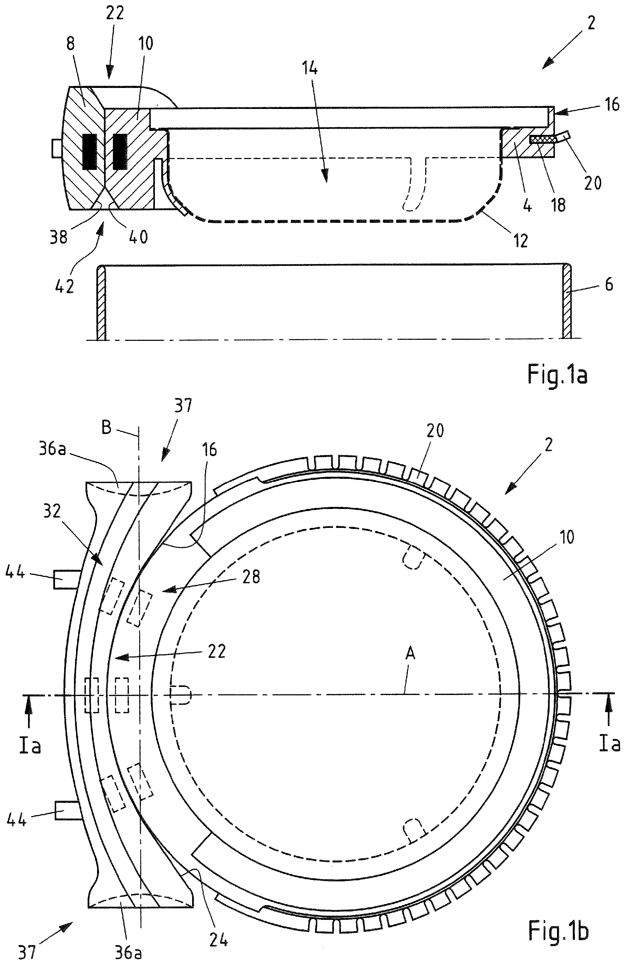

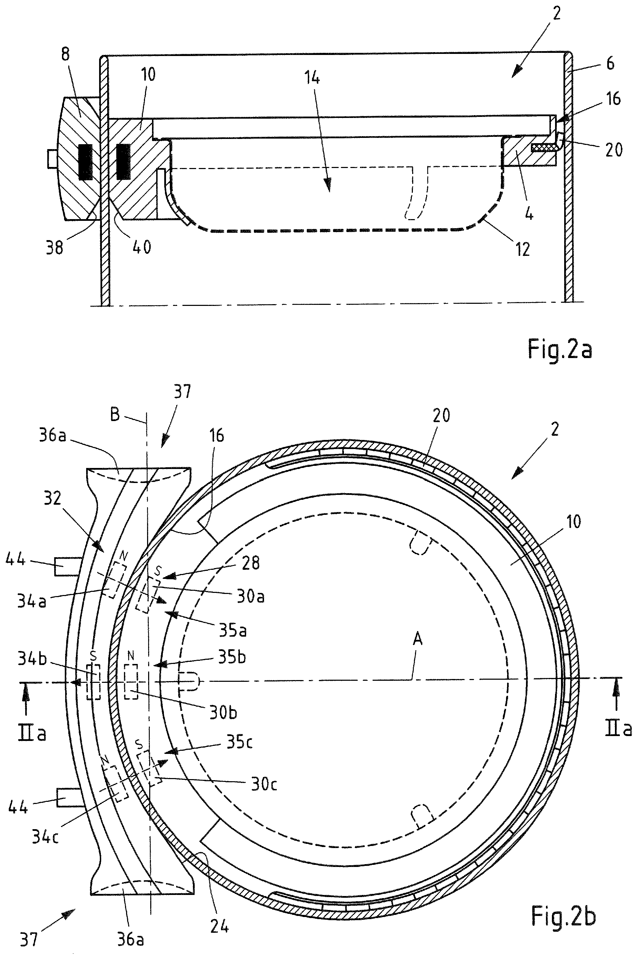

Die Figuren 1a-b und 2a-b zeigen ein Ausführungsbeispiel des Systems und des Griffelements. Fig. 1a und 2a zeigen jeweils einen Querschnitt in der in Fig. 1b mit "Ia" bzw. in Fig. 2b mit "IIa" bezeichneten Schnittebene. Die Fig. 1b und 2b zeigen jeweils eine Aufsicht des Systems und des Griffelements.

Das System 2 umfasst einen Teesiebeinsatz 4 zum Einsetzen in eine Brühkammer 6 eines Teeautomaten und ein von dem Siebeinsatz 4 separates Griffelement 8. Die Fig. 1a - b zeigen den Teesiebeinsatz 4 vor und die Fig. 2a- b nach dem Einsetzen in die Brühkammer 6.

Der Teesiebeinsatz 4 weist einen im Wesentlichen ringförmigen Teesiebeinsatzkörper 10 auf, an dem ein Sieb 12 befestigt ist, so dass innerhalb des Teesiebeinsatzkörpers 10 eine Aufnahme 14 für eine Zutatenportion, insbesondere eine Portion Teeblätter, bereitgestellt wird. Der Teesiebeinsatzkörper 10 weist eine konvexe randseitige Außenfläche 16 in Form eines Zylindermantels auf. Die Dimensionen des Teesiebeinsatzes 4 sind an die Innendimensionen der Brühkammer 6 angepasst, für die der Teesiebeinsatz 4 vorgesehen ist.

In einer entlang eines Abschnitts der Außenfläche 16 verlaufenden Nut 18 ist ein Dichtungselement 20 eingesetzt, das, wenn der Teesiebeinsatz 4 wie in Fig. 2a gezeigt in die Brühkammer 6 eingesetzt ist, an der Wandung der Brühkammer 6 anliegt und den Teesiebeinsatz 4 zur Wandung der Brühkammer abdichtet.

Das Griffelement 8 weist einen Kopplungsbereich 22 mit einer konkaven Kontaktfläche 24 in Form eines Zylindermantelabschnitts auf, die bei Kopplung mit dem Teesiebeinsatz 4 wie in Fig. 1b gezeigt mit der konvexen Außenfläche 16 des Teesiebeinsatzes 4 zur Anlage kommt. Durch die konkave Form der Kontaktfläche 24 des Griffelements 8 umgibt das Griffelement 8 den Teesiebeinsatz 4 bereichsweise. Dadurch kann das Griffelement 8 besser am Teesiebeinsatz 4 befestigt werden.

Das Griffelement 8 und der Teesiebeinsatz 4 weisen weiterhin zueinander korrespondierende magnetische Kopplungsmittel in Form einer Magnetanordnung 28 des Teesiebeinsatzes 4 mit Magneten 30a-c und einer Magnetanordnung 32 des Griffelementes 8 mit Magneten 34a-c auf. Das Griffelement 8 und der Teesiebeinsatz 4 sind, wie in Figur 1b und 2b dargestellt, derart magnetisch koppelbar, dass jeweils ein Magnet der Magnetanordnung 32 des Griffelementes 8 und ein Magnet der Magnetanordnung 28 des Teesiebeinsatzes 4 ein Magnetpaar 36a-c bilden, wobei die beiden Magnete jedes Magnetpaars 36a-c mit entgegensetzen magnetischen Polen einander gegenüberliegen (in Fig. 2b durch "N" bzw "S" für die jeweils nach außen weisende magnetische Polung gekennzeichnet).

Die Magnete 34a-c des Griffelementes 8 sind vorzugsweise mit wechselnder Polarität ausgebildet und die Magnete 30a-c des Teesiebeinsatzes 4 mit entsprechend umgekehrter Polarität. Beispielsweise können die Magnete 34a-c mit dem magnetischen Nordpol zu den korrespondierenden Südpolen der Magnete 30a-c weisen und der Magnet 34b kann mit einem magnetischen Südpol zum magnetischen Nordpol des Magneten 30b weisen. Auf diese Weise kann das Griffelement 8 nur in bestimmten Ausrichtungen zum Teesiebeinsatz 4 mit diesem gekoppelt werden, wodurch die Handhabung erleichtert wird.

Weiterhin sind die Magnete 30a-c bzw. 34a-c jeweils in azimutaler Richtung voneinander beabstandet. Dies führt mit der konkaven Krümmung der Kontaktfläche 24 dazu, dass die Polrichtungen der Magnete 34a-c (in Fig. 2b durch gestrichelte Pfeile dargestellt) schräg zueinander verlaufen, wodurch die Kopplung des Griffelements 8 am Teesiebeinsatz 4 verstärkt wird.

Das Griffelement 8 ist so ausgebildet, dass es zu einer Drehsymmetrieachse A senkrecht auf der Kontaktfläche 24 eine zweizählige Drehsymmetrie aufweist, so dass es sowohl in der in Fig. 1a-b gezeigten Ausrichtung als auch in einer um die Achse A um 180° gedrehten Ausrichtung mit dem Teesiebeinsatz 4 gekoppelt werden kann. Insbesondere weist auch die Magnetanordnung 32 und die Polung der Magnete 34-c eine entsprechende Drehsymmetrie auf.

Um das sichere Ergreifen zu erleichtern, sind am Griffelement 8 zwei einander gegenüberliegende seitliche Griffflächen 36a-b vorgesehen, wobei die durch die Griffflächen 36a-b verlaufende Achse B senkrecht zur Achse A verläuft. Die beiden Griffflächen 36a-b sind derart angeordnet, dass sie ergriffen werden können, wenn die Kontaktfläche 24 mit dem Teesiebeinsatz 4 gekoppelt ist. Damit stellen die Griffflächen 36a-b einen Griffbereich 37 des Griffelements 8 dar.

Das Griffelement 8 und der Teesiebeinsatz 4 weisen wie in Fig. 1a dargestellt jeweils eine unterseitige Fase 38, 40 auf. Die Flächen dieser Fasen bilden, wenn das Griffelement 8 und der Teesiebeinsatz 4, wie in Figur 1a dargestellt, gekoppelt sind, eine unterseitige, kreisbogenförmige Nut 42 zum Aufsetzen auf den Rand der Brühkammer 6.

Die Nut 42 erleichtert das Einsetzen des Teesiebeinsatzes 4 in die Brühkammer 6. So führt das Einführen des Randes des Brühkammer 6 in die Nut 42 dazu, dass das Griffelement 8 und der Teesiebeinsatz 4 voneinander getrennt werden, so dass der Teesiebeinsatz 4 wie in Fig. 2a gezeigt in die Brühkammer 6 gelangt, während das Griffelement 8 außerhalb der Brühkammer 6 verbleibt.

Die Kontaktfläche 24 des Griffelements 8 ist wie in Figur 2b gezeigt an die äußere Fläche der Brühkammer 6 angepasst. Insbesondere ist der Biegeradius der zylindermantelförmigen Fläche 24 an den Biegeradius der Außenfläche der Brühkammer 6 angepasst. Dies führt dazu, dass der Biegeradius der Fläche 24 des Griffelements 8 wie in Fig. 1b dargestellt etwas größer ist als der Biegeradius der Fläche 16 des Teesiebeinsatzes 4.

Durch die Anpassung des Griffelements 8 an die Brühkammer 6 kann der Teesiebeinsatz 4 wie in Figur 2a gezeigt weiterhin mit dem Griffelement 8 gekoppelt sein, auch wenn der Teesiebeinsatz 4 sich in der Brühkammer 6 befindet.

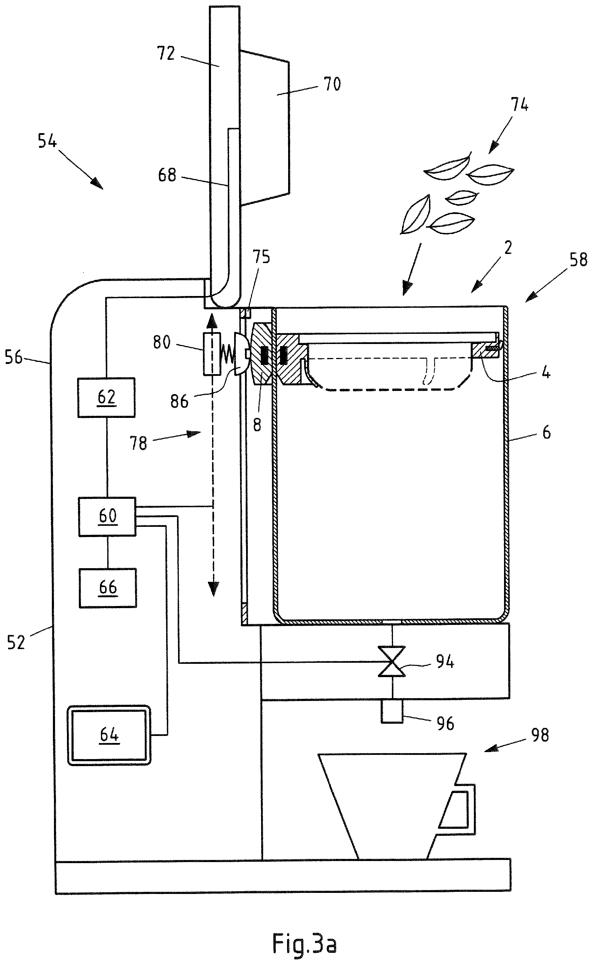

An der der Kontaktfläche 24 gegenüber liegenden Fläche des Griffelements 8 sind zwei Vorsprünge 44 vorgesehen, um das Griffelement 8 mit einer Verfahreinrichtung eines Teeautomaten koppeln zu können. Dies wird nun im Folgenden anhand der Figuren 3a-c erläutert.

Die Figuren 3a-c zeigen das System 2 mit einem zugehörigen Teeautomaten 52 in Teilquerschnittsansicht. Der Teesiebeinsatz 4, das Griffelement 8 und der Teeautomat 52 bilden ein weiteres Ausführungsbeispiel des Systems 54.

Der Teeautomat 52 ist zur automatischen Zubereitung von Teegetränken in der Brühkammer 6 eingerichtet. Der Teeautomat weist ein Gehäuse 56 mit einer Brühkammeraufnahme 58 auf, in die die Brühkammer 6 einsetzbar ist. Die Brühkammer 6 ist also als entnehmbare Brühkammer ausgestaltet. Stattdessen könnte die Brühkammer auch integral mit dem Gehäuse 56 ausgebildet sein.

In dem Gehäuse 56 sind weitere Komponenten angeordnet, die für die automatische Zubereitung von Teegetränken erforderlich sind. So weist der Teeautomat eine Steuereinrichtung 60, eine Heißwasserversorgung 62 und eine Nutzerschnittstelle 64 in Form eines Touchscreens auf.

Die Steuereinrichtung 60 ist zur Steuerung des Teeautomaten 52 eingerichtet. Auf einem mit der Steuereinrichtung 60 verbundenen Speicher 66 ist ein Programm mit Befehlen gespeichert, deren Ausführung auf einem Mikroprozessor der Steuereinrichtung 60 eine Steuerung der einzelnen Komponenten des Teeautomaten 52 bewirkt. Beispielsweise kann die Steuereinrichtung 60 zur automatischen Zubereitung eines Teegetränkes die Heißwasserversorgung 62 ansteuern, so dass diese zur Durchführung eines Brühvorgangs über eine entsprechende Zuleitung 68 heißes Wasser durch einen Verteilerkopf 70 in die Brühkammer 6 leitet.

Weiterhin kann die Steuereinrichtung 60 über die Nutzerschnittstelle 64 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

Um mit dem Teeautomaten 52 ein Teegetränk zuzubereiten, kann ein Nutzer den als schwenkbaren Deckel 72 ausgebildeten oberen Teil des Gehäuses 56 wie in Figur 3a gezeigt nach oben klappen, so dass die Brühkammer 6 von oben zugänglich ist. Der Nutzer kann dann mit Hilfe des Griffelementes 8 den Siebeinsatz 4 in die Brühkammer 6 einsetzen. Zu diesem Zweck koppelt der Nutzer das Griffelement 8 mit dem Teesiebeinsatz 4 und setzt diesen, wie in Figur 1a und 2a gezeigt, auf den Rand der Brühkammer 6 auf. Dadurch werden Griffelement 8 und Teesiebeinsatz 4 voneinander getrennt, so dass der Teesiebeinsatz in die Brühkammer 6 gelangt. In den Teesiebeinsatz 4 kann der Nutzer dann eine Zutatenportion, insbesondere eine Portion loser Teeblätter 74 geben. Um die Positionierung des Griffelements 8 an der Brühkammer 6 bzw. am Teeautomaten 52 zu erleichtern, können am Teeautomaten 52 Justiervorsprünge 75 oder Justiernuten vorgesehen sein, an denen das Griffelement 8, beispielsweise anhand der Vorsprünge 44, ausgerichtet werden kann.

Um den Teesiebeinsatz 4 innerhalb der Brühkammer 6 verfahren zu können, weist der Teeautomat 52 eine Verfahreinrichtung 78 auf, mit der ein bewegliches Element 80 an der Brühkammer 6 auf- und abgefahren werden kann, zum Beispiel mittels einer durch einen Motor angetriebenen Gewindestange.

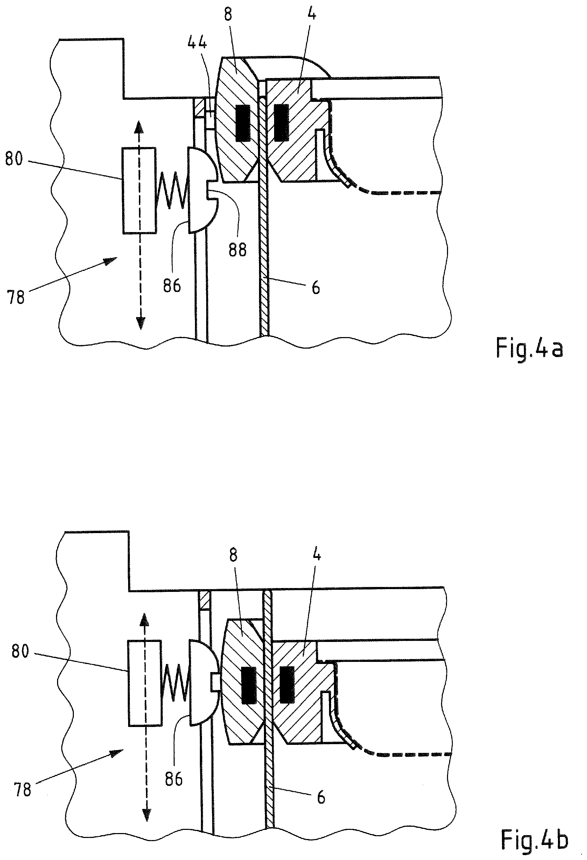

Am beweglichen Element 80 sind Verbindungsmittel in Form zweier in Schnittansicht der Fig. 3a hintereinander angeordneter federgelagerter Rastkörper 86 zur Befestigung des Griffelements 8 an dem beweglichen Element 80 vorgesehen, deren Funktion nachfolgend anhand der Fig. 4a-b näher erläutert wird. Die Rastkörper 86 umfassen Aufnahmen 88, in die das Griffelement 8 mit den rückseitigen Vorsprüngen 44 einrastbar ist, indem das Griffelement 8 wie in der Folge der Fig. 4a-b gezeigt von oben auf die Rastkörper 86 herabgedrückt wird. Die federgelagerten Rastkörper 86 weichen beim Herabdrücken des Griffelements 8 nach hinten aus, so dass die Vorsprünge 44 in die Aufnahmen 88 gelangen können. Durch das Zurückfedern der federgelagerten Rastkörper 86 werden die Vorsprünge 44 im Rastkörper 86 verriegelt, so dass sich das Griffelement 8 nicht versehentlich von der Verfahreinrichtung 78 lösen kann.

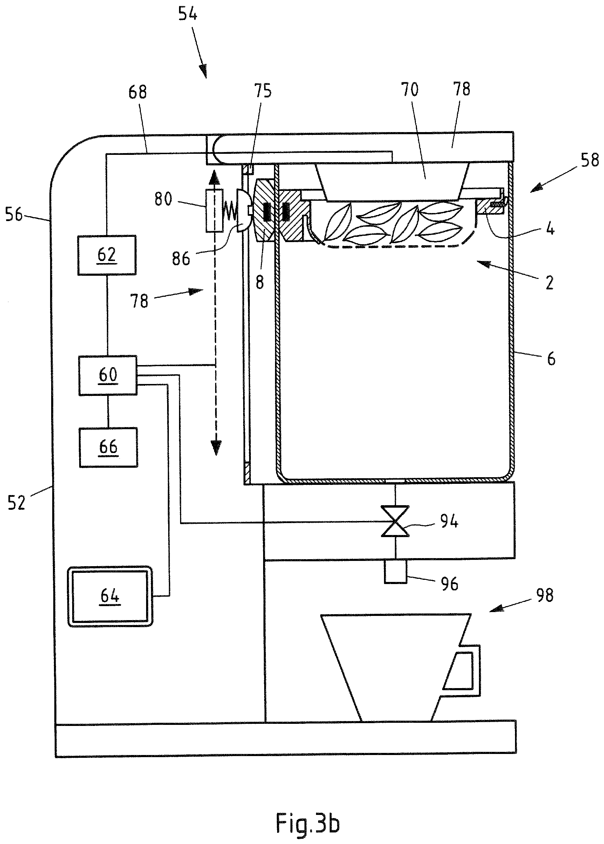

Nach dem Einsetzen des Teesiebeinsatzes 4 in die Brühkammer 6 und dem Verrasten der Vorsprünge 44 in den Rastkörpern 86 kann der Benutzer den Deckel 72 wie in Fig. 3b dargestellt schließen. Das Koppeln des Griffelements 8 mit der Verfahreinrichtung 78 kann auch durch das Schließen des Deckels 72 bewirkt werden. Insbesondere kann der Deckel 72 so dimensioniert sein, dass er das Griffelement 8 beim Schließen so weit herabdrückt, dass die Vorsprünge 44 in die Aufnahmen 88 der Rastkörper 86 einrasten.

Der Nutzer kann durch eine entsprechende Eingabe über die Nutzerschnittstelle 64 nun einen Brühvorgang starten.

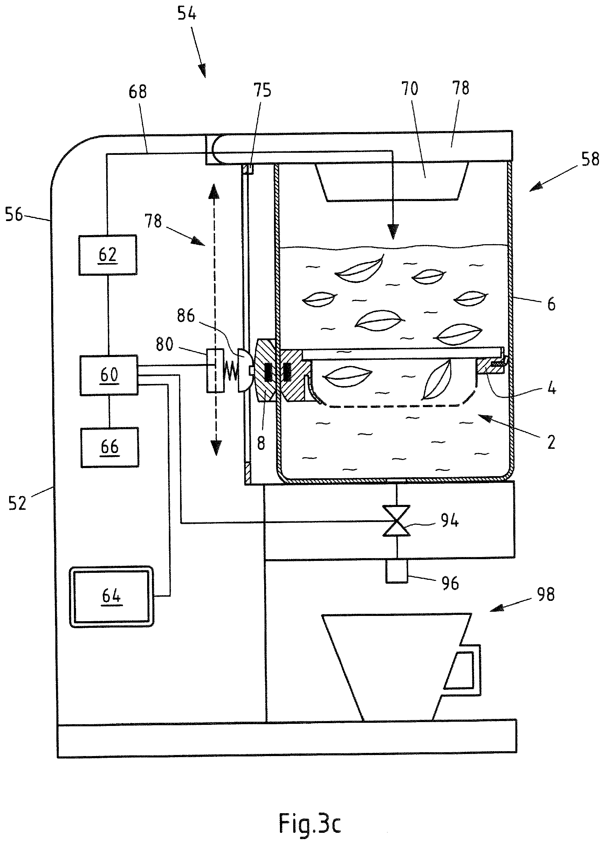

Auf den Befehl des Nutzers steuert die Steuereinrichtung 60 dann die Heißwasserversorgung 62 an, so dass wie in Fig. 3c dargestellt eine vorgegebene Menge Wasser mit einer vorgegebenen Temperatur in die Brühkammer 6 eingeleitet wird. Weiterhin wird der Teesiebeinsatz 4 durch die Verfahreinrichtung 78, die über das Griffelement 8 magnetisch mit dem Teesiebeinsatz 4 gekoppelt ist, hinabgefahren, so dass der Teesiebeinsatz 4 und damit die darin enthaltenen Teeblätter 74 mit dem in die Brühkammer 6 eingeleiteten Wasser in Kontakt kommen.

Nach Ablauf einer vorgegebenen Brühdauer steuert die Steuereinrichtung 60 die Verfahreinrichtung 78 an, so dass diese den Siebeinsatz 4 und damit die Teeblätter 74 wieder aus dem Wasser in der Brühkammer 6 heraushebt. Das fertige Teegetränk kann dann auf eine Nutzeranforderung, beispielsweise über die Nutzerschnittstelle 64 oder automatisch, mittels eines steuerbaren Ventils 94 durch einen Auslass 96 in eine unterhalb der Brühkammer 6 angeordnete Aufnahme 98 für das fertige Teegetränk, beispielsweise eine Tasse oder eine Kanne, abgefüllt werden.

Nach Ende des Brühvorgangs kann der Nutzer den Deckel 72 öffnen, das Griffelement 8 ergreifen und mit diesem den damit weiterhin magnetisch gekoppelten Teesiebeinsatz 4 aus der Brühkammer 6 heben, ohne den Teesiebeinsatz 4 mit der Hand berühren zu müssen. Auf diese Weise können Verbrühungen vermieden werden.

Um die Entnahme des Griffelements 8 zu vereinfachen, kann die Verfahreinrichtung 78 einen Antrieb aufweisen, um die Rastkörper 86 z.B. auf eine Nutzeranforderung über den Touchscreen 64 nach hinten zu fahren, um das Griffelement 8 freizugeben, d.h. zu entriegeln. Der Nutzer kann so zunächst das Griffelement 8 ergreifen und dieses dann durch Tastendruck auf dem Touchscreen 64 durch den Teeautomaten 52 freigeben lassen, so dass er das Griffelement 8 und den damit magnetisch gekoppelten Teesiebeinsatz 4 einfach aus dem Teeautomaten 52 entnehmen kann.

Der Teesiebeinsatz 4 kann anschließend mit dem Griffelement 8 beispielsweise zu einer Spüle transportiert werden, um dort gereinigt zu werden.

Die zuvor beschriebenen Systeme 2 und 54 erlauben damit eine einfachere Handhabung des Teesiebeinsatzes 4, um den Teesiebeinsatz 4 zu reinigen, in eine Brühkammer 6 einzusetzen und aus dieser zu entnehmen.

## Patentansprüche

1. System (2, 54) zur Handhabung eines Teesiebeinsatzes (4), umfassend:
- einen Teesiebeinsatz (4) zum Einsetzen in eine Brühkammer (6) eines Teeautomaten (52) und
- ein von dem Teesiebeinsatz (4) separates Griffelement (8), wobei das Griffelement (8) und der Teesiebeinsatz (4) zueinander korrespondierende magnetische Kopplungsmittel (28, 32) aufweisen, so dass der Teesiebeinsatz (4), wenn er über die Kopplungsmittel (28, 32) magnetisch mit dem Griffelement (8) gekoppelt ist, durch Ergreifen des Griffelements (8) transportiert werden kann,
**dadurch gekennzeichnet,**
**dass** der Teesiebeinsatz (4) und das Griffelement (8) jeweils eine Fläche (38, 40) aufweisen, die, wenn das Griffelement (8) mit dem Teesiebeinsatz (4) gekoppelt ist, zusammen eine unterseitige Nut (42) zum Aufsetzen auf den Rand einer Brühkammer (6) bilden.

2. System nach Anspruch 1,
**dadurch gekennzeichnet, dass** das Griffelement (8) eine Magnetanordnung (32) mit mehreren Magneten (34a-c) aufweist, die mit einer korrespondierenden Magnetanordnung (28) des Teesiebeinsatzes (4) magnetisch derart koppelbar ist, dass die Magnete (34a-c) der Magnetanordnung (32) des Griffelements (8, 106) mit den Magneten (30a-c) der Magnetanordnung (28) des Teesiebeinsatzes (4) mehrere Magnetpaare (36a-c) bilden.

3. System nach Anspruch 2,
**dadurch gekennzeichnet, dass** die Magnete (30a-c, 34a-c) der Magnetanordnungen (28, 32) mit wechselnder Polarität ausgerichtet sind.

4. System nach einem der Ansprüche 1 bis 3,
**dadurch gekennzeichnet, dass** der Teesiebeinsatz (4) einen Teesiebeinsatzkörper (10) mit einer konvexen randseitigen Außenfläche (16) aufweist und dass das Griffelement (8) eine zu der Außenfläche (16) des Teesiebeinsatzkörpers (10) korrespondierende konkave Kontaktfläche (24) aufweist, die an der konvexen randseitigen Außenfläche (16) des Teesiebeinsatzkörpers (10) zur Anlage kommt, wenn das Griffelement (8) mit dem Teesiebeinsatz (4) gekoppelt wird.

5. System nach einem der Ansprüche 1 bis 4,
weiter umfassend eine Brühkammer (6) für einen Teeautomaten (52), wobei der Teesiebeinsatz (4) zum Einsetzen in die Brühkammer (6) eingerichtet ist.

6. System nach Anspruch 5,
**dadurch gekennzeichnet dass** das Griffelement (8) eine konkave Kontaktfläche (24) aufweist, die an eine Außenwandfläche der Brühkammer (6) angepasst ist.

7. System nach Anspruch 5 oder 6,
weiter umfassend einen die Brühkammer (6) umfassenden Teeautomaten (52) zur automatischen Zubereitung von Teegetränken, wobei der Teeautomat (52) eine Verfahreinrichtung (78) mit Verbindungsmitteln (86) zum lösbaren Verbinden des Griffelements (8) mit der Verfahreinrichtung (78) aufweist, wobei die Verfahreinrichtung (78) dazu eingerichtet ist, das Griffelement (8), wenn es mit der Verfahreinrichtung (78) verbunden ist, an der Brühkammer (6) zu verfahren.

8. System nach Anspruch 7,
**dadurch gekennzeichnet, dass** der Teeautomat (52) ein an das Griffelement (8) angepasstes Justiersystem (75) zur Ausrichtung des Griffelements (8) in einer vorgegebenen Ausrichtung aufweist.

9. System nach einem der Ansprüche 1 bis 8,
- wobei das Griffelement (8) einen Griffbereich (37) zum Ergreifen des Griffelements (8) und einen Kopplungsbereich (22) zur Anlage an einen mit dem Griffelement (8) zu koppelnden Teesiebeinsatz (4) aufweist,
- wobei der Kopplungsbereich (22) eine konkave Kontaktfläche (24) zur Anlage an eine korrespondierende konvexe Außenfläche (16) des Teesiebeinsatzes (4) aufweist und
- wobei das Griffelement (8) eine Magnetanordnung (32) mit mindestens einem Magneten (34a-c) aufweist, die derart angeordnet ist, um den Teesiebeinsatz (4) mit korrespondierender Magnetanordnung (28) bei Anlage des Teesiebeinsatzes (4) an die konkave Kontaktfläche (16) magnetisch mit dem Griffelement (8) zu koppeln.

10. System nach Anspruch 9,
**dadurch gekennzeichnet, dass** die Magnetanordnung (32) des Griffelements (8) mehrere Magnete (34a-c) umfasst, die in wechselnder Polarität zur konkaven Kontaktfläche (26) ausgerichtet sind.

11. System nach Anspruch 9 oder 10,
**dadurch gekennzeichnet, dass** die Magnetanordnung (32) des Griffelements (8) einen ersten und einen zweiten Magneten (34a-c) umfasst, deren Polachsen schräg zueinander verlaufen, insbesondere in einem Winkel zwischen 10° und 170°.

12. System nach Anspruch 7 oder 8,
**dadurch gekennzeichnet, dass** die Verbindungsmittel (86) verriegelbar sind und der Teeautomat (52) eine Steuereinrichtung (10) aufweist, die dazu eingerichtet ist, den Teeautomaten (52) entsprechend einem Verfahren zu steuern,
- bei dem die Verbindungsmittel (86) nach dem Verbinden eines Griffelements (8) mit der Verfahreinrichtung (78) verriegelt werden,
- bei dem nach dem Verriegeln der Verbindungsmittel (86) ein Brühvorgang durchgeführt wird, bei dem das Griffelement (8) an der Brühkammer (6) verfahren wird, und
- bei dem die Verbindungsmittel (86) nach dem Brühvorgang entriegelt werden, so dass das Griffelement (8) aus der Verfahreinrichtung (78) entnehmbar ist.

## Claims

1. System (2, 54) for handling a tea strainer insert (4), comprising:
- a tea strainer insert (4) to be inserted into a brewing chamber (6) of a tea maker (52) and
- a gripping element (8), which is separate from the tea strainer insert (4), wherein the gripping element (8) and the tea strainer insert (4) have magnetic coupling means (28, 32) corresponding to one another such that the tea strainer insert (4), when it is magnetically coupled to the gripping element (8) via the coupling means (28, 32), can be transported by grasping the gripping element (8),
**characterised in**
**that** the tea strainer insert (4) and the gripping element (8) each have a surface (38, 40), which, when the gripping element (8) is coupled to the tea strainer insert (4), together form an underside groove (42) to be placed on the edge of a brewing chamber (6).

2. System according to claim 1,
**characterised in that** the gripping element (8) has a magnet arrangement (32) with a plurality of magnets (34a-c), which magnet arrangement is magnetically couplable to a corresponding magnet arrangement (28) of the tea strainer insert (4) such that the magnets (34a-c) of the magnet arrangement (32) of the gripping element (8,106) form a plurality of magnet pairs (36a-c) with the magnets (30a-c) of the magnet arrangement (28) of the tea strainer insert (4).

3. System according to claim 2,
**characterised in that** the magnets (30a-c, 34a-c) of the magnet arrangements (28, 32) are aligned with alternating polarity.

4. System according to any one of claims 1 to 3,
**characterised in that** the tea strainer insert (4) has a tea strainer insert body (10) with a convex edge-side outer surface (16) and **in that** the gripping element (8) has a concave contact surface (24) corresponding to the outer surface (16) of the tea strainer insert body (10), which convex edge-side outer surface comes into contact with the convex edge-side outer surface (16) of the tea strainer insert body (10) when the gripping element (8) is coupled to the tea strainer insert (4).

5. System according to any one of claims 1 to 4,
further comprising a brewing chamber (6) for a tea maker (52), wherein the tea strainer insert (4) is configured to be inserted into the brewing chamber (6).

6. System according to claim 5,
**characterised in that** the gripping element (8) has a concave contact surface (24), which is adapted to an outer wall surface of the brewing chamber (6).

7. System according to claim 5 or 6,
further comprising a tea maker (52) for automated preparation of tea beverages, the tea maker comprising the brewing chamber (6), wherein the tea maker (52) has a moving device (78) with connection means (86) for detachably connecting the gripping element (8) to the moving device (78), wherein the moving device (78) is configured to move the gripping element (8) on the brewing chamber (6) when the gripping element (8) is connected to the moving device (78).

8. System according to claim 7,
**characterised in that** the tea maker (52) has an adjusting system (75), adapted to the gripping element (8), to align the gripping element (8) in a predefined alignment.

9. System according to any one of claims 1 to 8,
- wherein the gripping element (8) has a gripping region (37) for grasping the gripping element (8) and a coupling region (22) for abutting the tea strainer insert (4) to be coupled to the gripping element (8),
- wherein the coupling region (22) has a concave contact surface (24) for abutting a corresponding convex outer surface (16) of the tea strainer insert (4) and
- wherein the gripping element (8) has a magnet arrangement (32) with at least one magnet (34a-c) which is arranged to magnetically couple the tea strainer insert (4) with corresponding magnet arrangement (28) to the gripping element (8) when the tea strainer insert (4) abuts the concave contact surface (16).

10. System according to claim 9, **characterised in that** the magnet arrangement (32) of the gripping element (8) comprises a plurality of magnets (34a-c), which are aligned in alternating polarity to the concave contact surface (26).

11. System according to claim 9 or 10, **characterised in that** the magnet arrangement (32) of the gripping element (8) comprises a first and a second magnet (34a-c), whose polar axes run obliquely to one another, in particular at an angle of between 10° and 170°.

12. System according to claim 7 or 8, **characterised in that** the connection means (86) are lockable and the tea maker (52) has a control device (10) configured to control the tea maker (52) according to a method,
- in which twhe connection means (86) are locked with the moving device (78) after connecting a gripping element (8),
- in which after locking the connection means (86) a brewing process is carried out in which the gripping element (8) is moved on the brewing chamber (6) and
- in which the connection means (86) are unlocked after the brewing process such that the gripping element (8) can be removed from the moving device (78).

## Revendications

1. Système (2, 54) permettant de manipuler un insert de passoire à thé (4), comportant:
- un insert de passoire à thé (4) à insérer dans une chambre d'infusion (6) d'une machine à thé (52) et
- un élément de poignée (8), séparé de l'insert de passoire à thé (4), l'élément de poignée (8) et l'insert de passoire à thé (4) présentant des moyens de couplage magnétiques (28, 32) correspondant l'un à l'autre, de sorte que l'insert de passoire à thé (4) peut être transporté en saisissant l'élément à poignée (8) lorsqu'il est couplé magnétiquement avec l'élément de poignée (8) à l'aide des moyens de couplage (28, 32),
**caractérisé en ce que**
- l'insert de passoire à thé (4) et l'élément de poignée (8) présentent respectivement une surface (38,40) et, lorsque l'élément de poignée (8) est couplé avec l'insert de passoire à thé (4), ces surfaces forment tous ensemble une rainure (42), située sur le côté inférieur, pour la pose sur le bord d'une chambre d'infusion (6).

2. Système selon la revendication 1,
**caractérisé en ce que** l'élément de poignée (8) présente un agencement d'aimants (32) avec plusieurs aimants (34a-c), lequel est susceptible d'être couplé magnétiquement à un agencement d'aimants correspondant (28) de l'insert de passoire à thé (4), de sorte que les aimants (34a-c) de l'agencement d'aimants (32) de l'élément de poignée (8,106) forment avec les aimants (30a-c) de l'agencement d'aimants (28) de l'insert de passoire à thé (4) plusieurs paires d'aimants (36a-c).

3. Système selon la revendication 2,
**caractérisé en ce que** les aimants (30a-c, 34a-c) des agencements d'aimants (28, 32) sont alignés avec polarité alternante.

4. Système selon l'une des revendications 1 à 3,
**caractérisé en ce que** l'insert de passoire à thé (4) présente un corps d'insert de passoire à thé (10) doté d'une surface extérieure convexe côté bord (16) et **en ce que** l'élément de poignée (8) présente une surface de contact concave (24) correspondante à la surface extérieure (16) du corps d'insert de passoire de thé (10), laquelle vient en appui contre la surface extérieure convexe côté bord (16) du corps d'insert de passoire de thé (10) lorsque l'élément de poignée (8) est couplé avec l'insert de passoire à thé (4).

5. Système selon l'une des revendications 1 à 4,
comportant en outre une chambre d'infusion (6) pour une machine à thé (52), l'insert de passoire à thé (4) étant configuré à être inséré dans la chambre d'infusion (6).

6. Système selon la revendication 5,
**caractérisé en ce que** l'élément de poignée (8) présente une surface de contact concave (24), laquelle est adaptée à la surface de paroi extérieure de la chambre d'infusion (6).

7. Système selon la revendication 5 ou 6,
comportant en outre une machine à thé (52) pour la préparation automatisée de boissons à base de thé, la machine à thé comprenant la chambre d'infusion (6), la machine à thé (52) présentant un dispositif de déplacement (78) avec des moyens de raccordement (86) permettant le raccordement, de façon amovible, de l'élément de poignée (8) avec le dispositif de déplacement (78), le dispositif de déplacement (78) étant agencé de sorte à déplacer l'élément de poignée (8) le long de la chambre d'infusion (6), lorsque celui-ci est relié au dispositif de déplacement (78).

8. Système selon la revendication 7,
**caractérisé en ce que** la machine à thé (52) présente un système d'alignement (75) adapté à l'élément de poignée (8) pour aligner l'élément de poignée (8) dans une orientation prédéterminée.

9. Système selon l'une des revendications 1 à 8,
- l'élément de poignée (8) présentant une partie formant poignée (37) permettant de saisir l'élément de poignée (8) et une zone de couplage (22) destinée à venir en appui contre un insert de passoire à thé (4) à coupler avec l'élément de poignée (8),
- la zone de couplage (22) présentant une surface de contact concave (24) destinée à venir en appui contre une surface extérieure convexe correspondante (16) de l'insert de passoire à thé (4) et
- l'élément de poignée (8) présentant un agencement d'aimants (32) avec au moins un aimant (34a-c), lequel est agencé de sorte à coupler magnétiquement l'insert de passoire à thé (4), doté de l'agencement d'aimants correspondant (28), avec l'élément de poignée (8) lorsque l'insert de passoire à thé (4) est en appui contre la surface de contact concave (16).

10. Système selon la revendication 9,
**caractérisé en ce que** l'agencement d'aimants (32) de l'élément de poignée (8) comporte plusieurs aimants (34a-c), lesquels sont alignés, avec polarité alternante, vers la surface de contact concave (26).

11. Système selon la revendication 9 ou 10,
**caractérisé en ce que** l'agencement d'aimants (32) de l'élément de poignée (8) comporte un premier et un deuxième aimant (34a-c), dont les axes polaires s'étendent de manière oblique l'un par rapport à l'autre, notamment dans un angle entre 10 et 170 degrés.

12. Système selon la revendication 7 ou 8,
**caractérisé en ce que** les moyens de raccordement (86) sont susceptible d'être verrouillés et la machine à thé (52) présente un dispositif de commande (10) qui est configuré de sorte à commander la machine à thé (52) conformément à un procédé,
- dans lequel les moyens de raccordement (86) sont verrouillés après le raccordement d'un élément de poignée (8) au dispositif de déplacement (78),
- dans lequel, après le verrouillage des moyens de raccordement (86), un processus d'infusion est exécuté, lors duquel l'élément de poignée (8) est déplacé le long de la chambre d'infusion (6), et
- dans lequel les moyens de raccordement (86) sont déverrouillés après le processus d'infusion, de sorte que l'élément de poignée (8) est susceptible d'être retiré hors du dispositif de déplacement (78).
